(19) Europäisches Patentamt
European Patent Office
Office européen des brevets

(11) **EP 4 120 337 A1**

(12) **EUROPEAN PATENT APPLICATION**
published in accordance with Art. 153(4) EPC

(43) Date of publication:
**18.01.2023 Bulletin 2023/03**

(21) Application number: **21767763.2**

(22) Date of filing: **10.03.2021**

(51) International Patent Classification (IPC):
*H01L 23/36* [(2006.01)]   *H01L 23/373* [(2006.01)]
*C08L 91/00* [(2006.01)]   *C08L 101/12* [(2006.01)]
*C09K 5/14* [(2006.01)]   *C08K 3/013* [(2018.01)]
*C08K 3/34* [(2006.01)]

(52) Cooperative Patent Classification (CPC):
**C08K 3/013; C08K 3/34; C08L 91/00;
C08L 101/12; C09K 5/14; H01L 23/36;
H01L 23/373**

(86) International application number:
**PCT/JP2021/009673**

(87) International publication number:
**WO 2021/182550 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2020 JP 2020041983**

(71) Applicant: **SUMITOMO METAL MINING CO., LTD.
Tokyo
105-8716 (JP)**

(72) Inventors:
• **KOBAYASHI, Hiroshi**
  **Ome-shi, Tokyo 198-0025 (JP)**
• **KIBE, Tatsuo**
  **Ome-shi, Tokyo 198-0025 (JP)**
• **KASHIWAYA, Satoshi**
  **Ome-shi, Tokyo 198-0025 (JP)**

(74) Representative: **Jones, Nicholas Andrew
Withers & Rogers LLP
2 London Bridge
London SE1 9RA (GB)**

(54) **THERMALLY CONDUCTIVE PASTE**

(57) Provided is a thermally conductive paste which can be applied satisfactorily using conventional coating methods due to the ability to be formed into a paste, and which effectively suppresses pump out. Specifically provided is a thermally conductive paste containing a base oil composition and an inorganic powder filler, wherein the base oil composition contains a base oil, a thermoplastic resin that has a softening point of 50-150°C, and a volatile solvent, and the solubility parameter of the volatile solvent as predicted using Fedor's method is 9.0-12.0 $\mathrm{cal}^{(1/2)}/\mathrm{cm}^{(3/2)}$.

**Description**

TECHNICAL FIELD

The present invention relates to a thermally conductive paste to be applied and used between a heat generating component and a heat dissipating component.

BACKGROUND ART

In an electronic device, a heat dissipating component such as a heat sink is attached to dissipate heat generated from heat generating components such as semiconductor elements and mechanical parts. In order to efficiently transfer heat to the heat dissipating component, a thermally conductive member is sandwiched between the heat generating component and the heat dissipating component. The thermally conductive members include a solid thermally conductive sheet, a liquid thermally conductive paste, curable thermally conductive grease that changes from a liquid state to a solid state, and the like, and are used according to applications of use.

For example, Patent Document 1 discloses thermally conductive grease containing a base oil including a copolymer of unsaturated dicarboxylic acid dibutyl ester and $\alpha$-olefin, and a thermally conductive filler. Patent Document 1 mentions that the thermally conductive grease has high thermal conductivity, and good dispensability and compressibility.

However, such thermally conductive grease is in a form of a paste at ambient temperature and flows when pressurized, so that it is easily applied in a thin film and has excellent adhesion, but there is a problem that such thermally conductive grease easily flows out from a coated part by expansion and contraction of a heat generating component or the like caused by repetition of heat generation and heat dissipation and has inferior pump-out resistance. Note here that, pump-out refers to a phenomenon in which thermally conductive grease protrudes from the coated part, and voids (air gaps) are generated inside the grease, and good thermal conductivity cannot be maintained.

In order to solve these problems, a thermally conductive paste, which has properties of being solid at ambient temperature, but adhering to an adherend by absorbing heat and being softened after being incorporated into a heat generating component, and which is capable of reducing thermal resistance, is being developed (see, for example, Patent Documents 2 to 4). Information relating to technologies of thermally conductive paste is disclosed in, for example, Japanese Unexamined Patent Application, Publication No. 2001-89756 (Patent Document 2), Japanese Unexamined Patent Application, Publication No. 2004-75760 (Patent Document 3), and Japanese Unexamined Patent Application, Publication No. 2007-150349 (Patent Document 4).

Patent Document 1: Japanese Patent No. 4713161
Patent Document 2: Japanese Unexamined Patent Application, Publication No. 2001-89756
Patent Document 3: Japanese Unexamined Patent Application, Publication No. 2004-75760
Patent Document 4: Japanese Unexamined Patent Application, Publication No. 2007-150349

DISCLOSURE OF THE INVENTION

Problems to be Solved by the Invention

A thermally conductive paste may be applied to the surface of a heat generating component and/or a heat dissipating component by conventionally known printing methods such as a screen printing method. On the other hand, since such a thermally conductive paste includes an inorganic powder filler or the like to impart thermal conductivity, when, for example, inorganic powder fillers in the thermally conductive paste agglomerate, it becomes difficult to form a paste. Consequently, applying by using a conventionally known printing method is not necessarily easy.

The present invention has been proposed in view of such circumstances, and has an object to provide a thermally conductive paste which can be formed into a paste and can be therefore applied favorably even by using a conventionally known application method, and which can effectively suppress occurrence of pump-out.

Means for Solving the Problems

The present inventors found that the above-mentioned problem can be solved by a thermally conductive paste containing a thermoplastic resin and a volatile solvent, in which the volatile solvent has a solubility parameter in a predetermined range, and have reached completion of the present invention.

(1) A first aspect of the present invention is a thermally conductive paste including a base oil composition and an inorganic powder filler, the base oil composition containing a base oil, a thermoplastic resin having a softening point of 50°C or more and 150°C or less, and a volatile solvent, in which the volatile solvent has a solubility parameter obtained by Fedors estimation method of 9.0 to 12.0 cal$^{(1/2)}$/cm$^{(3/2)}$.

(2) A second aspect of the present invention is the thermally conductive paste in the first aspect, containing 10 parts by mass or more and 200 parts by mass or less of the volatile solvent with respect to 100 parts by mass of the base oil.

(3) A third aspect of the present invention is the thermally conductive paste in the first or second aspect, in which the inorganic powder filler includes a first inorganic powder filler having an average particle diameter in a range of 10 μm or more and 100 μm or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler, in which the inorganic powder filler has average particle diameters satisfying the following formulae (1) and (2) .

$$D_2/D_1 < 0.70 \quad (1)$$

$$D_3/D_2 < 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

(4) A fourth aspect of the present invention is the thermally conductive paste in the third aspect, in which the average particle diameter of the second inorganic powder filler is in a range of 1 μm or more and 50 μm or less, and the average particle diameter of the third inorganic powder filler is in a range of 0.1 μm or more and 5 μm or less.

(5) A fifth aspect of the present invention is the thermally conductive paste in the third or fourth aspect, containing 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler, with respect to 100 parts by mass of the inorganic powder filler.

(6) A sixth aspect of the present invention is the thermally conductive paste in any one of the first to fifth aspects, in which the inorganic powder filler contains at least one or more types selected from copper, aluminum, zinc oxide, magnesium oxide, aluminum oxide, aluminum nitride, and silicon carbide.

(7) A seventh aspect of the present invention is the thermally conductive paste in any one of the first to sixth aspects, in which a total of the base oil and the thermoplastic resin is 5.3 parts by mass or more and 33.3 parts by mass or less with respect to 100 parts by mass of the inorganic powder filler.

(8) An eighth aspect of the present invention is the thermally conductive paste in any one of the first to seventh aspects, containing 50 parts by mass or more and 200 parts by mass or less of the thermoplastic resin with respect to 100 parts by mass of the base oil.

(9) A ninth aspect of the present invention is the thermally conductive paste in any one of the first to eighth aspects, in which the base oil contains at least one or more types selected from a mineral oil, a synthetic hydrocarbon oil, a diester, polyol ester, and a phenyl ether.

(10) A tenth aspect of the present invention is a thermally conductive paste in any one of the first to ninth aspects, in which the thermoplastic resin includes at least one or more resins selected from an ester resin, an acrylic resin, a rosin resin, and a cellulose resin.

(11) An eleventh aspect of the present invention is the thermally conductive paste in any one of the first to tenth aspects, further containing a thixotropy adjusting agent, in which the thixotropy adjusting agent contains at least one or more types selected from bentonite, mica, kaolin, sepiolite, saponite, and hectorite.

(12) A twelfth aspect of the present invention is the thermally conductive paste in the eleventh aspect, containing 1 part by mass or more and 10 parts by mass or less of the thixotropy adjusting agent with respect to 100 parts by mass of the base oil.

(13) A thirteenth aspect of the present invention is a method for producing a thermally conductive sheet, the method including applying the thermally conductive paste according to any one of the first to twelfth aspects on the surface of a heat generating component and/or a heat dissipating component, and drying the thermally conductive paste to obtain the thermally conductive sheet.

(14) A fourteenth aspect of the present invention is a method for producing a heat generating component provided with a heat dissipating component, the heat generating component and the heat dissipating component being adhered to each other via a thermally conductive sheet, the method including applying the thermally conductive paste of any one of the first to twelfth aspects on a surface of the heat generating component and/or the heat dissipating component; drying the thermally conductive paste to obtain a thermally conductive sheet; and allowing the heat generating component and the heat dissipating component to adhere to each other via the thermally conductive sheet.

Effects of the Invention

Since the thermally conductive paste of the present invention can be formed into a passed, and therefore can be applied favorably even by using a conventionally known application method, and occurrence of pump-out can be effectively suppressed.

PREFERRED MODE FOR CARRYING OUT THE INVENTION

Hereinafter, specific embodiments of the present invention (hereinafter, referred to as "the present embodiments") will be described in detail. The present invention is not limited to the following embodiments, and can be carried out with appropriate modifications within the scope of the object of the present invention.

<<Thermally conductive paste>>

The thermally conductive paste according to the present embodiment contains a base oil composition and an inorganic powder filler. The base oil composition contains a base oil, a thermoplastic resin having a softening point of 50°C or more and 150°C or less, and a volatile solvent, and the volatile solvent has a solubility parameter obtained by Fedors estimation method of 9.0 to 12.0 cal$^{(1/2)}$/cm$^{(3/2)}$.

The study by the present inventors has revealed the followings. In other words, when the base oil composition containing a base oil, a thermoplastic resin, and a volatile solvent, the thermally conductive paste can be formed into a paste and thus coating characteristics at room temperature by a conventionally known applying method such as screen printing method can be improved.

Furthermore, when the volatile solvent has a predetermined solubility parameter, agglomeration of inorganic powder filler in the thermally conductive paste can be effectively suppressed, and application property at room temperature can be further improved.

Then, the applied thermally conductive paste is formed into a semisolid thermally conductive sheet containing a base oil, a soft thermoplastic resin, and an inorganic powder filler by volatilization of a volatile solvent. For example, by forming the thermally conductive sheet between a heat generating component and a heat dissipating component, the adhesion between the heat generating component and the heat dissipating component can be enhanced.

Furthermore, when the thermally conductive sheet includes a thermoplastic resin having a softening point of 50°C or more and 150°C or less at a predetermined rate, the thermally conductive sheet is softened at a predetermined temperature or more, thus causing a so-called phase-change. Thus, at high temperature by, for example, heat generation from the heat generating component, fluidity of the thermally conductive sheet is enhanced, and spread more uniformly, adhesion is enhanced in a state in which a space between the heat generating component and the heat dissipating component becomes narrow, the thermal resistance can be further reduced, and heat conductive efficiency can be improved.

On the other hand, as a subsequent temperature drop, the thermally conductive sheet that has uniformly spread hardens at temperature less than a predetermined temperature based on the softening point of the thermoplastic resin to cause a phase change, thereby being returned to a thermally conductive sheet in a semi-solid state having moderate hardness. Thus, while the adhesion between the heat generating component and the heat dissipating component is maintained, the outflow of the base oil can be prevented by the networked thermoplastic resin and the pump out can be effectively suppressed.

Hereinafter, each component included in the base oil composition will be described.

<1. Base oil composition>

The base oil composition contains at least a base oil, a thermoplastic resin, and a volatile solvent. Each component contained in the base oil composition will be described.

(1) Base oil

As the base oil, various base oils can be used, and examples thereof include a mineral oil, a hydrocarbon base oil such as a synthetic hydrocarbon oil, an ester base oil, an ether base oil, a phosphate ester, a silicone oil, a fluorine oil, and the like. Among them, a base oil containing at least one or more types selected from a mineral oil, a hydrocarbon base oil such as a synthetic hydrocarbon oil, an ester-based oil, and an ether-based oil, is preferably used.

As the mineral oil, for example, the mineral oil-based lubricating oil fraction is purified by a suitable combination of refining methods such as solvent extraction, solvent dewaxing, hydrorefining, hydrocracking, and wax isomerization, and a 150 neutral oil, a 500 neutral oil, a bright stock, a high viscosity index base oil, or the like, can be used. The mineral oil used as the base oil is preferably a highly hydrogenated high viscosity index base oil.

As the synthetic hydrocarbon oil, for example, a poly-$\alpha$-olefin such as normal paraffin, isoparaffin, polybutene, polyisobutylene, 1-decene oligomer, co-oligomer of 1-decene and ethylene, or a hydride thereof can be used alone or in a mixture of two or more kinds. Among them, poly-$\alpha$-olefin is more preferred. Alkylbenzene, alkylnaphthalene, or the like, can also be used.

Examples of the ester base oil include diester and polyol ester. Examples of the diester include an ester of a dibasic acid such as adipic acid, azelaic acid, sebacic acid, and dodecanedioic acid. The dibasic acid is preferably aliphatic dibasic acid having 4 or more and 36 or less carbon atoms. The alcohol residue constituting the ester part is preferably a monohydric alcohol residue having 4 or more and 26 or less carbon atoms. The polyol ester is an ester of neopentyl polyol in which no hydrogen atom exists on the carbon at the $\beta$-position, and specific examples thereof include carboxylic acid ester such as neopentyl glycol, trimethylolpropane, and pentaerythritol. The carboxylic acid residue constituting the ester portion is preferably a monocarboxylic acid residue having 4 or more and 26 or less carbon atoms.

Examples of the ether-based base oil include polyglycol, (poly) phenyl ether, and the like. Examples of the polyglycol include polyethylene glycol, polypropylene glycol, and derivatives thereof. Examples of the (poly) phenyl ether include alkylated diphenyl ethers such as monoalkylated diphenyl ethers and dialkylated diphenyl ethers, alkylated tetraphenyl ethers such as monoalkylated tetraphenyl ethers and dialkylated tetraphenyl ethers, and alkylated pentaphenyl ethers such as pentaphenyl ethers, monoalkylated pentaphenyl ethers, and dialkylated pentaphenyl ethers.

The dynamic viscosity of the base oil is preferably 10 mm$^2$/s or more and 1200 mm$^2$/s or less at 40°C. It is preferable that the dynamic viscosity at 40°C is 10 mm$^2$/s or more, because evaporation of the base oil and oil separation at a high temperature tend to be suppressed. Furthermore, dynamic viscosity at 40°C of 1200 mm$^2$/s or less improves coating property (handling property) of a thermally conductive paste can be improved, and fluidity can be improved when the phase-change occurs.

(2) Thermoplastic resin

The thermoplastic resin softens the thermally conductive paste to impart fluidity at a high temperature. As the thermoplastic resin, one having a softening point of 50°C or more and 150°C or less is used. Note here that the softening point is a temperature at which the thermoplastic resin softens and starts to be deformed when thermoplastic resin is heated. The softening point can be measured using, for example, a melt-mass flow rate measuring machine.

As the thermoplastic resin having a softening point of 50°C or more and 150°C or less, at least one or more resins selected from an ester resin, an acrylic resin, a rosin resin, and a cellulose resin are preferably contained. Furthermore, a mixture obtained by mixing a thermoplastic resin such as wax with various compounds such as a rosin derivative may be used.

The content of the thermoplastic resin is not particularly limited, but the content is preferably 50 parts by mass or more and 200 parts by mass or less with respect to 100 parts by mass of base oil. When the content is 50 parts by mass or more, while the adhesion between the heat generating component and the heat dissipating component is maintained, the outflow of the base oil can be prevented by the networked thermoplastic resin and the pump out can be effectively suppressed. When the content is 200 parts by mass or less with respect to 100 parts by mass of base oil, the thermally conductive paste spreads uniformly and is formed into a thin film easily.

Note here that the total of the base oil and the thermoplastic resin is preferably 5.3 parts by mass or more and 33.3 parts by mass or less with respect to 100 parts by mass of the below-mentioned inorganic powder filler.

(3) Volatile solvent

The volatile solvent makes a thermally conductive paste into grease, and improves application property at room temperature. A volatile solvent may be any solvent that has a boiling point sufficient to volatilize under environment at room temperature or higher temperatures, and examples of the volatile solvent include a solvent having a boiling point at 70°C or more and 250°C or less.

The volatile solvent has a solubility parameter obtained by Fedors estimation method of 9.0 to 12.0 cal$^{(1/2)}$/cm$^{(3/2)}$. The solubility parameter shows a value obtained from the Fedors estimation method described in R. F. Fedors, Polymer Engineering Science, 14, p147 (1974). In the Fedors estimation method, the cohesive energy density and the molar molecular volume are considered to depend on the type and number of substituents, and the solubility parameter is represented by the following formula (1). The solubility parameter is an intrinsic value of each compound.

$$\delta \ = \ (\Sigma E_{coh}/\Sigma V)^{1/2} \quad (1)$$

[In the formula, $E_{coh}$ represents cohesive energy density (unit: cal/mol), V represents molar molecular volume (cm$^3$/mol), and $\delta$ represents solubility parameter (unit: cal$^{(1/2)}$/cm$^{(3/2)}$)]

Examples of the volatile solvent satisfying the above-mentioned boiling point and solubility parameter $\delta$ include ethanol, 1-propanol, 2-propanol, 1-butanol, 2-butanol, 2-ethyl-1-butanol, and 3-methyl-1-butanol. , 1-pentanol, 2-pentanol, 1-hexanol, 1-heptanol, 1-octanol, 2,4-dimethyl-3-pentanol, 3-pentanol, 2-ethyl-1-hexanol, 1-nonanol, 3,5,5-trimethyl-1-hexanol, 2-methyl-3-butin-2-ol, $\alpha$-terpineol, $\beta$-terpineol, $\gamma$-terpineol, texanol, diethylene glycol, ethylene glycol dibutylate, diethylene glycol monobutyl ether, Hexyl glycol, methylpropyltriglycol, diethylene glycol monobutyl ether, ethylene glycol monomethyl ether, ethylene glycol monoethyl ether, propylene glycol monomethyl ether, phenylpropylene glycol, dipropylene glycol monomethyl ether, cyclopentanone, cyclohexanone, 4-hydroxy-4-methyl-2-pentanone, limonene, methyl ethyl ketone, acetone, acetonitrile, 2,4,4-trimethyl-1,3-pentadiol-1-monoisobutyrate, and the like.

The content of the volatile solvent is not particularly limited, but the content is preferably 10 parts by mass or more and 200 parts by mass or less with respect to 100 parts by mass of base oil. When the content is 10 parts by mass or more, agglomeration of the inorganic powder filler is suppressed, and the application property at room temperature can be improved. When the content is 200 parts by mass or less, the content of thermoplastic resin and the like can be relatively increased, and, for example, pump-out can be effectively suppressed.

(4) Other additives

In order to enhance various properties of a thermally conductive paste, additives including at least one or more agents selected from a thixotropy adjusting agent, an antioxidant agent, a diffusion inhibitor, and a dispersing agent can be contained.

The antioxidant agent prevents oxidation of the base oil contained in the base oil composition. Examples of the antioxidant agent include compounds such as hindered amine, hindered phenol, sulfur, phosphorus, benzotriazole, triazine, benzophenone, benzoate, and HALS.

Examples of the thixotropy adjusting agent include organically treated bentonite, organically treated sepiolite, urea compounds, sodium terephthalamate, polytetrafluoroethylene, silica gel, mica, kaolin, saponite, hectorite, and the like.

When the thixotropy adjusting agent is contained, the content of the thixotropy adjusting agent is 1 part by mass or more and 10 parts by mass or less with respect to 100 parts by mass of base oil. When the content is 1 part by mass or more, the outflow of the base oil can be prevented, the pump-out can be effectively suppressed. When the content is 10 parts by mass or less, the thermally conductive paste spreads uniformly and a thin film can be formed easily.

Examples of the dispersing agent include a polyglycerol monoalkyl ether compound, a compound having a carboxylic acid structure such as a fatty acid ester, a polycarboxylic acid-based compound, and the like. These may be used alone or in combination of two or more thereof. In particular, a polyglycerol monoalkyl ether compound, a compound having a carboxylic acid structure, and a polycarboxylic acid-based compound are preferably used in combination.

The contents of these other additives are preferably more than 0 parts by mass and less than 20 parts by mass with respect to 100 parts by mass of the base oil composition.

<2. Inorganic powder filler>

The inorganic powder filler imparts high thermal conductivity to a thermally conductive paste. As the inorganic powder filler to be used for the thermally conductive paste of the present embodiment, an inorganic powder filler having one type of average particle diameter may be used, or a plurality of inorganic powder fillers having different average particle diameters may be used.

When a plurality of inorganic powder fillers having different average particle diameters is used, for example, three types of inorganic fillers having different average particle dimeters including, a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler can be used.

Then, preferably, the average particle diameters of the inorganic powder fillers satisfy the following formulae (1) and (2).

$$D_2/D_1 < 0.70 \quad (1)$$

$$D_3/D_2 < 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

When the first, second, and third inorganic powder fillers having a predetermined relation of average particle diameters are contained, it is possible to reduce the base oil entering a gap between particles of the inorganic powder filler. Therefore, the thermally conductive paste can spread more uniformly in a state in which the content of the inorganic powder filler is increased.

The average particle diameter of the second inorganic powder filler is not particularly limited as long as the above formulae are satisfied, but the average particle diameter is preferably in a range of 1 $\mu$m or more and 50 $\mu$m or less. The thermally conductive paste can spread more uniformly in a state in which the content of the inorganic powder filler is increased.

The average particle diameter of the third inorganic powder filler is not particularly limited as long as the above formulae are satisfied, but the average particle diameter is preferably in a range of 0.1 $\mu$m or more and 5 $\mu$m or less. Thus, the thermally conductive paste can spread more uniformly in a state in which the content of the inorganic powder filler is increased.

The content of each of the first, second, and third inorganic powder fillers is not particularly limited, but it is preferable that the content of the first inorganic powder filler is 40 parts by mass or more and 80 parts by mass or less, the content of the second inorganic powder filler is 10 parts by mass or more and 50 parts by mass or less, and the content of the third inorganic powder filler is 10 parts by mass or more and 40 parts by mass or less, respectively, with respect to 100 parts by mass of the inorganic powder filler. When the content of each of the first, second, and third inorganic powder fillers is in such a range, the thermally conductive paste can spread further more uniformly in a state in which the content of the inorganic powder filler is increased.

Types of the inorganic powder filler to be used for the thermally conductive paste of the present embodiment are not particularly limited as long as they have higher thermal conductivity than the base oil, and, for example, powders such as metallic oxide, inorganic nitride, metal (also including an alloy), a silicon compound, and the like, are preferably used. As the inorganic powder filler of the present invention, one type may be used, or two or more types may be used in combination.

For obtaining electrical insulation, powders of nonconductive materials of semiconductor or ceramic, such as zinc oxide, magnesium oxide, aluminum oxide, aluminum nitride, boron nitride, silicon carbide, silica, and diamond can be preferably used, powder of zinc oxide, magnesium oxide, aluminum oxide, aluminum nitride, boron nitride, silicon carbide, and silica is more preferable, and powder of zinc oxide, aluminum oxide and aluminum nitride is particularly preferable. These inorganic powder fillers may be used alone or two or more thereof may be used in combination.

When metal is used as the inorganic powder filler, powder of copper, aluminum, and the like, can be used.

Note here that the first, second, and third inorganic powder fillers mean inorganic powder fillers having a predetermined average particle diameter, and may include inorganic powder fillers having different materials. For example, the first inorganic powder filler may be an inorganic powder filler made of one type of material, or may be an inorganic powder filler made of two types or more materials as long as an average particle diameter is the same. The same is true to the second and third inorganic powder fillers.

Furthermore, the thermally conductive paste of the present embodiment may contain an inorganic powder filler having different average particle diameter, other than the above first, second, and third inorganic powder fillers. However, the content of the first, second, and third inorganic powder fillers contained in the thermally conductive paste of the present embodiment is preferably 80% by mass or more, more preferably 90% by mass or more, further preferably 95% by mass or more, further more preferably 99% by mass or more, and the most preferably 100% by mass (in other words, inorganic powder fillers having different average particle diameter other than the above first, second, and third inorganic powder fillers are not contained) with respect to 100% by mass of the inorganic powder filler.

Note here that in the thermally conductive paste according to the present embodiment, the average particle diameter of the inorganic powder filler can be calculated as volume average diameter of particle size distribution measured by the laser diffraction scattering method (in accordance with JIS R 1629: 1997).

The content of the inorganic powder filler is preferably 50% by mass or more and 90% by mass or less, and more preferably 60% by mass or more and 90% by mass or less with respect to 100% by mass of thermally conductive paste. The content is preferably 50% by mass or more, because the thermal conductivity of the thermally conductive paste itself can be sufficiently enhanced, and oil separation of the base oil can be suppressed to suppress leakage of the base oil. On the other hand, when the content is 93% by mass or less, deterioration of consistency is suppressed, and the thermally conductive paste can spread more uniformly.

<3. Method for producing thermally conductive paste >

A method for producing the thermally conductive paste of the present embodiment is not particularly limited as long as components can be mixed uniformly. In a general production method, kneading is carried out using a planetary mixer, a rotation-revolution mixer, and the like, and uniformly kneading is carried out using a three-roll mill.

<4. Thermally conductive sheet and method for producing thermally conductive sheet>

A thermally conductive sheet can be produced using the thermally conductive paste according to the present embodiment. Specifically, the above-mentioned thermally conductive paste is applied to the surface of a heat generating component, a heat dissipating component, or the like, drying the thermally conductive paste, and volatilizing a volatile solvent in the thermally conductive paste to obtain a thermally conductive sheet containing a base oil, a soft thermoplastic resin, and an inorganic powder filler.

As the method for applying the thermally conductive paste, conventionally known methods such as screen printing, gravure printing, offset printing, flexographic printing, ink jet printing, dispenser printing, and the like, can be used.

The thermally conductive paste may be applied in a solid shape, or may be applied so as to form a predetermined pattern according to the shape of the surface of the heat generating component and/or the heat dissipating component.

The method for drying the thermally conductive paste is not particularly limited, and drying includes natural drying, drying by supplying air to a surface to be applied, or drying by heating.

Such a thermally conductive sheet has moderate flexibility and high handling property, and can be handled singly. For example, the thermally conductive sheet may be transported singly, and the heat generating component and the heat dissipating component can be joined to each other via the thermally conductive sheet at the transport destination.

<5. Method for producing heat generating component provided with heat dissipating component>

A heat generating component provided with a heat dissipating component can be also produced by using the thermally conductive paste according to the present embodiment. Specifically, the above-mentioned thermally conductive paste is applied on the surface of the heat generating component and/or the heat dissipating component, and the thermally conductive paste is dried to obtain a thermally conductive sheet, and the heat generating component and the heat dissipating component are bonded to each other via the thermally conductive sheet. Thus, a heat generating component provided with a heat dissipating component can also be produced.

EXAMPLES

Hereinafter, the present invention will be described in more detail based on Examples and Comparative Examples, but the present invention is not limited to the following Examples.

1. Production of thermally conductive paste

Materials shown in the following (A) to (F) were used to produce thermally conductive pastes having compositions shown in the following Table 1.

(Constituting components)

(A) Inorganic powder filler

   (A)-1: First inorganic powder filler

      Alumina 1: Average particle diameter = 40 $\mu$m
      Alumina 2: Average particle diameter = 30 $\mu$m
      Alumina 3: Average particle diameter = 50 $\mu$m
      Alumina 4: Average particle diameter = 70 $\mu$m
      Alumina 5: Average particle diameter = 110 $\mu$m

Alumina 6: Average particle diameter = 5 $\mu$m

(A)-2: Second inorganic powder filler

Alumina 7: Average particle diameter = 8 $\mu$m
Alumina 8: Average particle diameter = 15 $\mu$m
Alumina 9: Average particle diameter = 20 $\mu$m
Alumina 10: Average particle diameter = 30 $\mu$m
Alumina 11: Average particle diameter = 3.4 $\mu$m
Zinc oxide 1: Average particle diameter = 10 $\mu$m

(A)-3: Third inorganic powder filler

Alumina 12: Average particle diameter = 0.53 $\mu$m
Alumina 13: Average particle diameter = 0.83 $\mu$m
Alumina 14: Average particle diameter = 0.18 $\mu$m
Alumina 15: Average particle diameter = 5 $\mu$m
Zinc oxide 2: Average particle diameter = 0.60 $\mu$m

Note here that the average particle diameter of each of the inorganic powder fillers was measured by using a particle size distribution measuring device (SALD-7000 manufactured by Shimadzu Corporation) by a laser diffraction and scattering method (in accordance with JIS R 1629: 1997).
(B) Base oil

(B)-1: Dipentaerythritol isononanoate (ester-based oil)
(B)-2: Tri(2-ethylhexyl) trimellitate (ester-based oil)
(B)-3: Tri(3,5,5-trimethylhexyl) trimellitate (ester-based oil)

(C): Thermoplastic resin

(C)-1: Mixture of ester wax and rosin derivative. A thermoplastic resin having a mixing ratio of 150 parts by mass of rosin derivative with respect to 100 parts by mass of ester wax was used. The softening point of this thermoplastic resin is 110°C.
(C)-2: Acrylic resin (softening point: 105°C)
(C)-3: Cellulose resin (softening point: 135°C)
(C)-4: Ester resin (softening point: 70°C)

(D): Thixotropy adjusting agent

(D)-1: Organically treated bentonite
(D)-2: Organically treated sepiolite

(E)-1: ethylene glycol monomethyl ether

(The solubility parameter is in a range of 9.0 to 12.0 cal$^{(1/2)}$/cm$^{(3/2)}$)
(E)-2: 1-propanol
(The solubility parameter is in a range of 9.0 to 12.0 cal$^{(1/2)}$/cm$^{(3/2)}$)
(E)-3: methanol
(The solubility parameter is out of a range of 9.0 to 12.0 cal$^{(1/2)}$/cm$^{(3/2)}$)
(E)-4: butyl acetate
(The solubility parameter is out of a range of 9.0 to 12.0 cal$^{(1/2)}$/cm$^{(3/2)}$)

(F) Dispersing agent

(F)-1: Acid-based hydrocarbon polymer
(F)-2: Higher fatty acid ester

1. Preparation of thermally conductive paste

(A) An inorganic powder filler, (C) a thermoplastic resin, (D) a thixotropy adjusting agent, and (F) a dispersing agent were blended in (B) base oil so that ratios were as shown in the following Table, and the resulting mixture was placed in a tank of a universal mixing stirrer which had been heated to 150°C, and was vacuum-defoamed while kneading for 30 minutes. Thereafter, after cooling to 70°C, (E) a volatile solvent was added, the obtained product was vacuum-defoamed while being kneaded for 15 minutes, and after cooling, the mixture was taken out from the tank to obtain a thermally conductive paste.

[Table 1-1]

| | Inorganic powder filler | | | | | | | | Base oil | Thermo plastic resin | Total content of base oil and thermoplastic resin with respect to 100 parts by mass of in-organic pow-der filler (Parts by mass) | Content of thermoplastic resin with respect to 100 parts by mass of base oil (Parts by mass) | Thixotropy adjusting agent | | volatile solvent | | Dispersing agent | |
|---|---|---|---|---|---|---|---|---|---|---|---|---|---|---|---|---|---|---|
| | Type | | | Content of each component with respect to 100 parts by mass of inorganic powder filler (Parts by mass) | | | Ratio of average particle di a meters | | | | | | | | Content of thixotropy adjusting agent with respect to 100 pa rts by mass of base oil (Parts by mass) | | Content of vola-tile sol-vent with respect to 100 pa rts by mass of base oil (Parts by mass) | | Content of dis-persi ng agent with re-spect to 100 parts by mass of base oil (Parts by mass) |
| | First | Second | Third | First | Second | Third | $D_2/D_3$ | $D_3/D_2$ | Type | Type | | | Type | | Type | | Type | |
| Example 1 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 100 | (F)-1 | 5.5 |
| Example 2 | Alumina 1 | Alumina 7 | Alumina 12 | 70.0 | 17.5 | 12.5 | 0.20 | 0.07 | (B)-1 | (C)-1 | 19.8 | 100 | (D)-1 | 2.5 | (E)-1 | 100 | (F)-1 | 5.5 |
| Example 3 | Alumina 1 | Alumina 7 | Alumina 12 | 80.0 | 10.0 | 10.0 | 0.20 | 0.07 | (B)-1 | (C)-1 | 19.8 | 100 | (D)-1 | 2.5 | (E)-1 | 100 | (F)-1 | 5.5 |
| Example 4 | Alumina 1 | Alumina 7 | Alumina 12 | 52.0 | 28.0 | 20.0 | 0.20 | 0.07 | (B)-1 | (C)-1 | 19.8 | 100 | (D)-1 | 2.5 | [E]-1 | 100 | [F]-1 | 5.5 |
| Example 5 | Alumina 1 | Alumina 7 | Alumina 12 | 41.0 | 29.5 | 29.5 | 0.20 | 0.07 | (B)-1 | (C)-1 | 19.8 | 100 | (D)-1 | 2.5 | [E]-1 | 100 | (F)-1 | 5.5 |
| Example 6 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 100 | (F)-1 | 5.5 |
| Example 7 | Alumina 2 | Alumina 7 | Alumina 12 | 62.0 | 24.0 | 14.0 | 0.27 | 0.07 | (B)-1 | (C)-1 | 19.8 | 100 | (D)-1 | 2.5 | (E)-1 | 100 | [F]-1 | 5.5 |

[Table 1-2]

| | | | | | | | | | | | | | | | | | | |
|---|---|---|---|---|---|---|---|---|---|---|---|---|---|---|---|---|---|---|
| Example 8 | Alumina 3 | Alumina 7 | Alumina 12 | 62.0 | 24.0 | 14.0 | 0.16 | 0.07 | (B)-1 | (C)-1 | 19.3 | 100 | (D)-1 | 2.5 | (E)-1 | 100 | (F)-1 | 5.5 |
| Example 9 | Alumina4 | Alumina7 | Alumina 12 | 62.0 | 24.0 | 14.0 | 0.11 | 0.07 | (B)-1 | (C)-1 | 19.8 | 100 | (D)-1 | 2.5 | (E)-1 | 100 | (F)-1 | 5.5 |
| Example 10 | Alumina 1 | Alumina3 | Alumina 12 | 62.0 | 24.0 | 14.0 | 0.38 | 0.04 | (B)-1 | (C)-1 | 19.8 | 100 | (D)-1 | 2.5 | (E)-1 | 100 | (F)-1 | 5.5 |
| Example 11 | Alumina 1 | Alumina 9 | Alumina 13 | 62.0 | 24.0 | 14.0 | 0.40 | 0.04 | (B)-1 | (C)-1 | 19.8 | 100 | (D)-1 | 2.5 | (E)-1 | 100 | (F)-1 | 5.5 |
| Example 12 | Alumina 1 | Alumina 7 | Alumina 13 | 62.0 | 24.0 | 14.0 | 0.20 | 0.10 | (B)-1 | [C)-1 | 19.8 | 100 | (D)-1 | 2.5 | (E)-1 | 100 | (F)-1 | 5.5 |
| Example 13 | Alumina 1 | Alumina! | Alumina 14 | 62.0 | 24.0 | 14.0 | 0.20 | 0.02 | (B)-1 | (C)-1 | 19.8 | 100 | (D)-1 | 2.5 | (E)-1 | 100 | (F)-1 | 5.5 |
| Example 14 | Alumina 1 | Alumina 7 | Alumina 12 | 62.0 | 24.0 | 14.0 | 0.20 | 0.07 | (B)-1 | (C)-1 | 19.5 | 100 | (D)-1 | 5.6 | (E)-1 | 100 | (F)-1 | 0.5 |
| Example 15 | Alumina 1 | Alumina7 | Alumina 12 | 62.0 | 24.0 | 14.0 | 0.20 | 0.07 | (B)-1 | (C)-1 | 19.1 | 100 | (D)-1 | 9.9 | (E)-1 | 100 | (F)-1 | 0.5 |
| Example 16 | Alumina 1 | Alumina 7 | Alumina 12 | 62.0 | 24.0 | 14.0 | 0.20 | 0.07 | (B)-1 | (C)-1 | 19.9 | 100 | (D)-1 | 1.5 | (E)-1 | 100 | (F)-1 | 0.5 |
| Example 17 | Alumina 1 | Alumina 7 | Alumina 12 | 62.0 | 24.0 | 14.0 | 0.20 | 0.07 | (B)-1 | (C)-1 | 19.9 | 100 | (D)-1 | 1.2 | (E)-1 | 100 | (F)-1 | 0.5 |
| Example 18 | Alumina1 | Alumina 7 | Alumina 12 | 62.0 | 24.0 | 14.0 | 0.20 | 0.07 | (B)-1 | (C)-1 | 19.8 | 60 | (D)-1 | 2.5 | (E)-1 | 100 | (F)-1 | 5.5 |
| Example 19 | Alumina 1 | Alumina 7 | Alumina 12 | 62.0 | 24.0 | 14.0 | 0.20 | 0.07 | (B)-1 | (C)-1 | 19.8 | 190 | (D)-1 | 2.5 | (E)-1 | 100 | (F)-1 | 5.5 |

[Table 2-1]

| | Inorganic powder filler | | | | | | | | Base oil | Thermo plastic resin | Total content of base oil and thermoplastic resin with respect to 100 parts by mass of inorganic powder filler (Parts by mass) | Content of thermoplastic resin with respect to 100 parts by mass of base oil (Parts by mass) | Thixotropy adjusting agent | | Volatile solvent | | Dispersing agent | |
| | Type | | | Content of each component with respect to 100 parts by mass of inorganic powder filler (Parts by mass) | | | Ratio of average particle diameters | | | | | | | | | | | | |
| | First | Second | Third | First | Second | Third | $D_2/D_3$ | $D_3/D_2$ | Type | Type | | | Type | Content of thixotropy adjusting agent with respect to 100 parts by mass of base oil (Parts by mass | Type | Content of volatile solvent with respect to 100 parts by mass of base oil (Parts by mass) | Type | Content of dispersing agent with respect to 100 parts by mass of base oil (Parts by mass) |
| Example 20 | Alumina 1 | Alumina 7 | Alumina 12 | 62.0 | 24.0 | 14.0 | 0.20 | 0.07 | [B)-1 | (C)-1 | 19.8 | 100 | (D)-2 | 2.5 | (E)-2 | 100 | (F)-1 | 5.5 |
| Example 21 | Alumina 1 | Zinc oxide 1 | Alumina 12 | 62.0 | 24.0 | 14.0 | 0.25 | 0.05 | (B)-1 | (C)-1 | 19.8 | 100 | (DH | 2.5 | (E)-1 | 100 | (F)-1 | 5.5 |
| Example 22 | Alumina 1 | A! umma7 | Zinc oxide 2 | 62.0 | 24.0 | 14.0 | 0.20 | 0.08 | (B)-1 | (C)-1 | 19.8 | 100 | (D)-1 | 2.5 | (E)-1 | 100 | (F)-1 | 5.5 |
| Example 23 | Alumina 1 | Alumina 7 | Alumina 12 | 62.0 | 24.0 | 14.0 | 0.20 | 0.07 | (B)-2 | (C)-1 | 19.8 | 100 | (D)-1 | 2.5 | (E)-1 | 100 | (F)-1 | 5.5 |
| Example 24 | Alumina 1 | Alumina 7 | Alumina 12 | 62.0 | 24.0 | 14.0 | 0.20 | 0.07 | (B)-3 | (C)-1 | 19.8 | 100 | (D)-1 | 2.5 | (E)-1 | 100 | (F)-1 | 5.5 |
| Example 25 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-1 | 100 | (F)-1 | 5.5 |
| Example 26 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-1 | 100 | (F)-2 | 5.5 |

[Table 2-2]

| | | | | | | | | | | | | | | | | | | |
|---|---|---|---|---|---|---|---|---|---|---|---|---|---|---|---|---|---|---|
| Example 27 | Alumina 1 | Alumina 7 | Alumina 12 | 62.0 | 24.0 | 14.0 | 0.20 | 0.07 | (B)-1 | (C)-1 | 19,3 | 75 | (D)-1 | 2.5 | (E)-1 | 100 | (F)-1 | 5.5 |
| Example 28 | Alumina 1 | Alumina 7 | Alumina 12 | 62.0 | 24.0 | 14.0 | 0.20 | 0.07 | (B)-1 | (C)-1 | 19.8 | 55 | (D)-1 | 2.5 | (E)-1 | 100 | (F)-1 | 5.5 |
| Example 29 | Alumina 1 | Alumina 7 | Alumina 12 | 62.0 | 24.0 | 14.0 | 0.20 | 0.07 | (B)-1 | (C)-1 | 19.8 | 150 | (D)-1 | 2.5 | (E)-1 | 100 | (F)-1 | 5.5 |
| Example 30 | Alumina 1 | Alumina 7 | Alumina 12 | 62.0 | 24.0 | 14.0 | 0.20 | 0.07 | (B)-1 | (C)-1 | 19.8 | 195 | (D)-1 | 2.5 | [E)-1 | 100 | (F)-1 | 5.5 |
| Example 31 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 15 | (F)-1 | 5.5 |
| Example 32 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 50 | (F)-1 | 5.5 |
| Example 33 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 150 | (F)-1 | 5.5 |

[Table 2-3]

| | | | | | | | | | | | | | | | | | | |
|---|---|---|---|---|---|---|---|---|---|---|---|---|---|---|---|---|---|---|
| Example 34 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 195 | (F)-1 | 5.5 |
| Example 35 | Alumina 1 | Alumina 7 | Alumina 12 | 62.0 | 24.0 | 14.0 | 0.20 | 0.07 | (B)-1 | (C)-2 | 19.8 | 100 | (D)-1 | 2.5 | (E)-1 | 100 | (F)-1 | 5.5 |
| Example 36 | Alumina 1 | Alumina 7 | Alumina 12 | 62.0 | 24.0 | 14.0 | 0.20 | 0.07 | (B)-1 | (C)-3 | 19.8 | 100 | (D)-1 | 2.5 | (E)-1 | 100 | (F)-1 | 5.5 |
| Example 37 | Alumina 1 | Alumina 7 | Alumina 12 | 62.0 | 24.0 | 14.0 | 0.20 | 0.07 | (B)-1 | (C)-4 | 19.8 | 100 | (D)-1 | 2.5 | (E)-1 | 100 | (F)-1 | 5.5 |
| Comparative Example 1 | Alumina 1 | Alumina 7 | Alumina 12 | 62.0 | 24.0 | 14.0 | 0.20 | 0.07 | (B)-1 | (C)-1 | 19.8 | 20 | (D)-1 | 2.5 | (E)-3 | 100 | (F)-1 | 5.5 |
| Comp rative Example 2 | Alumina 1 | Alumina 7 | Alumina 12 | 62.0 | 24.0 | 14.0 | 0.20 | 0.07 | (B)-1 | (C)-1 | 19.8 | 250 | (D)-1 | 2.5 | (E)-4 | 100 | [F]-1 | 5.5 |

[Possibility of paste formation]

For possibility of paste formation, a heat dissipating resin paste prepared as mentioned above was visually observed to determine the possibility of paste formation. A case where paste formation was possible is described as "possible", a case where paste formatiion was not possible is described as "not possible". The results are shown in Table 1.

[Viscosity]

Viscosity of the thermally conductive pastes of the Examples and the Comparative Examples was measured. Specifically, viscosities of the thermally conductive pastes of the Examples and the Comparative Examples were measured by using a micro spiral viscometer (PCU-02V) manufactured by Malcom Co., Ltd. at room temperature and at shear velocity set at 6/s. The results are shown in Table 1 (in Table 1, described as "viscosity").

2. Production of thermally conductive sheet

The thermally conductive pastes of the Examples and the Comparative Examples were applied on a one-sided fluorine-treated PET film having a thickness of 0.05 mm and width of 100 mm by a screen printing method, and heated in a heating furnace set at 100°C for one hour to volatilize a volatile solvent. Thereafter, the thermoplastic resin was made into a melted state, and then a one-side fluorine-treated PET film of the same type was placed so that the fluorine-treated surface was brought into contact therewith to be sandwiched by the thermally conductive paste, which was allowed to pass through the heating roll set at 100°C. After cooling, the obtained product was cut into 100 mm in length, then the PET film was peeled off to obtain thermally conductive sheets having film thicknesses of 0.1 mm and 0.5 mm.

[Evaluation of thermal conductivity]

The thermal conductivity of the produced thermally conductive sheet was measured using a transient heat measuring device (in accordance with ASTMD5470) at room temperature. The results are shown in Table 1 (in Table 1, described as "thermal conductivity").

[Evaluation of Malleability]

The thermally conductive sheets of the thermally conductive paste of Examples and Comparative Examples produced above were evaluated for malleability. Specifically, a film thickness of the thermally conductive sheet when the thermally conductive sheet having a film thickness of 0.5 mm was pressed and crushed with a pressure of 0.1 MPa applied under environment at 80°C was measured. The evaluation result are shown in Table 1 (in Table 1, described as "malleability").

[Evaluation of initial flexibility of thermally conductive sheet]

The thermally conductive sheets of the thermally conductive paste of Examples and Comparative Examples produced above were observed for flexibility in the initial state. Specifically, when a thermally conductive sheet arranged on a polyimide film was folded, the thermally conductive sheet having no crack and having excellent flexibility was evaluated as "O (good)" for the initial flexibility. On the other hand, when a thermally conductive sheet was folded, the thermally conductive sheet having a crack and having poor flexibility was evaluated as "X (poor)" for the initial flexibility. Evaluation results are shown in Tables 3 and 4 (in Tables, described as "initial state" in "flexibility").

[Evaluation of flexibility of thermally conductive sheet after heating]

The thermally conductive sheets of the thermally conductive paste of Examples and Comparative Examples produced above were examined for flexibility after heating. Specifically, the produced thermally conductive sheet was disposed on a polyimide film, heated in a heating furnace set at 80°C for 10 minutes, and a thermally conductive sheet polyimide film was allowed to adhere thereto to obtain a test sample. Next, the test sample was then placed in a vertical orientation in an electric furnace that had been heated to 250°C and held for 4 hours. Thereafter, the test sample was taken out and cooled. Then, the thermally conductive sheet was bent at about 150° ten times, the flexibility of the sheet was determined based on two criteria of "O (good)" (no crack occurred), "X (poor)" (crack occurred at 10 times or less), and presence or absence of flexibility was determined. Evaluation results are shown in Tables 3 and 4.

[Evaluation of sagging resistance]

The above-mentioned thermally conductive sheets were evaluated for sagging resistance. Specifically, a thermally conductive sheet having a film thickness of 0.5 mm was placed on a glass substrate and heated in a heating furnace set at 80°C for 10 minutes, and the thermally conductive sheet and the glass substrate were allowed to adhere to each other to obtain a test sample. Next, the test sample was then placed in a vertical orientation in an electric furnace that had been heated to 150°C and held for 4 hours. The test sample was taken out and cooled, and then the thermally conductive sheet was visually observed. The presence or absence of sagging was determined based on two criteria, that is, sagging was evaluated as "O (good)" (no sagging was observed) and "X (poor)" (sagging was observed) immediately after the test sample was placed in a vertical orientation in the electric furnace (initial state) and when the test sample was placed in a vertical orientation in the electric furnace and held for four hours. Evaluation results are shown in Tables 3 and 4 (in Tables, described as "initial state" and "after heating" in "sagging resistance").

[Cycle test evaluation]

A thermally conductive sheet having a thickness of 0.5 mm which had been punched to a diameter of 10 mm was placed on an aluminum plate, and was heated in a heating furnace set at 80°C for 10 minutes to allow the thermally conductive sheet to adhere to the aluminum plate. Thereafter, 0.5 mm-spacer was provided and a slide glass was put thereon, and the thermally conductive sheet was sandwiched to obtain a test sample. The test sample was placed vertically from the ground in a heat cycle tester set to alternate between 0°C and 100°C (30 minutes each) and tested for 1000 cycles. After 1000 cycles, a migration length (mm) by which the thermally conductive sheet moved from its original location was measured. Evaluation results are shown in Tables 3 and 4.

[Table 3-1]

| | Evaluation results | | | | | | | |
|---|---|---|---|---|---|---|---|---|
| | Viscosity (Pa ▪ s) | Thermal conductivity (W/(m ▪ K)) | Malleability (um) | Flexibility | | Sagging resistance | | Cycle test |
| | | | | Initial state | After heating | Initial state | After heating | After 1000 cycles |
| Example 1 | 121 | 2.27 | 46 | ○ | ○ | ○ | ○ | 0.5 |
| Example 2 | 132 | 2.31 | 62 | ○ | ○ | ○ | ○ | 0.6 |
| Example 3 | 145 | 2.40 | 78 | ○ | ○ | ○ | ○ | 0.7 |
| Example 4 | 150 | 2.35 | 83 | ○ | ○ | ○ | ○ | 0.5 |
| Example 5 | 165 | 2.40 | 92 | ○ | ○ | ○ | ○ | 0.6 |
| Example 6 | 156 | 2.18 | 42 | ○ | ○ | ○ | ○ | 0.5 |
| Example 7 | 145 | 2.17 | 43 | ○ | ○ | ○ | ○ | 0.5 |

[Table 3-2]

| | | | | | | | | |
|---|---|---|---|---|---|---|---|---|
| Example 8 | 152 | 2.44 | 72 | ○ | ○ | ○ | ○ | 0.5 |
| Example 9 | 145 | 2.53 | 85 | ○ | ○ | ○ | ○ | 0.9 |
| Example 10 | 165 | 2.31 | 53 | ○ | ○ | ○ | ○ | 0.5 |
| Example 11 | 135 | 2.36 | 68 | ○ | ○ | ○ | ○ | 0.5 |

(continued)

| Example 12 | 151 | 2.40 | 55 | ○ | ○ | ○ | ○ | 0.5 |
|---|---|---|---|---|---|---|---|---|
| Example 13 | 136 | 2.23 | 72 | ○ | ○ | ○ | ○ | 0.5 |
| Example 14 | 146 | 2.44 | 43 | ○ | ○ | ○ | ○ | 0.4 |
| Example 15 | 129 | 2.53 | 51 | ○ | ○ | ○ | ○ | 0.4 |
| Example 16 | 157 | 2.14 | 45 | ○ | ○ | ○ | ○ | 0.6 |
| Example 17 | 161 | 2.10 | 44 | ○ | ○ | ○ | ○ | 0.7 |
| Example 18 | 112 | 2.34 | 51 | ○ | ○ | ○ | ○ | 0.7 |
| Example 19 | 178 | 2.45 | 65 | ○ | ○ | ○ | ○ | 0.6 |

[Table 4-1]

| | | Evaluation results | | | | | | |
|---|---|---|---|---|---|---|---|---|
| | | Viscosity (Pa·s) | Thermal conductivity [W/(m·K)] | Malleability (μm) | Flexibility | | Sagging resistance | | Cycle test |
| | | | | | Initial state | After heating | Initial state | After heating | After 1000 cycles |
| Example 20 | 152 | 2.24 | 45 | ○ | ○ | ○ | ○ | 0.5 |
| Example 21 | 165 | 2.43 | 45 | ○ | ○ | ○ | ○ | 0.7 |
| Example 22 | 173 | 2.35 | 48 | ○ | ○ | ○ | ○ | 0.7 |
| Example 23 | 154 | 2.25 | 48 | ○ | ○ | ○ | ○ | 0.6 |
| Example 24 | 135 | 2.28 | 47 | ○ | ○ | ○ | ○ | 0.6 |
| Example 25 | 134 | 2.24 | 45 | ○ | ○ | ○ | ○ | 0.5 |
| Example 26 | 165 | 2.24 | 45 | ○ | ○ | ○ | ○ | 0.5 |
| Example 27 | 115 | 2.18 | 45 | ○ | ○ | ○ | ○ | 0.8 |

[Table 4-2]

| Example 28 | 110 | 2.16 | 41 | ○ | ○ | ○ | ○ | 1.1 |
|---|---|---|---|---|---|---|---|---|
| Example 29 | 171 | 2.35 | 55 | ○ | ○ | ○ | ○ | 0.7 |
| Example 30 | 175 | 2.42 | 68 | ○ | ○ | ○ | ○ | 0.6 |
| Example 31 | 187 | 2.26 | 47 | ○ | ○ | ○ | ○ | 0.5 |
| Example 32 | 172 | 2.27 | 46 | ○ | ○ | ○ | ○ | 0.6 |
| Example 33 | 105 | 2.28 | 45 | ○ | ○ | ○ | ○ | 0.5 |
| Example 34 | 93 | 2.27 | 46 | ○ | ○ | ○ | ○ | 0.5 |

(continued)

| | | | | | | | | | |
|---|---|---|---|---|---|---|---|---|---|
| Example 35 | 125 | 2.25 | 48 | ○ | ○ | ○ | ○ | 0.7 |
| Example 36 | 131 | 2.28 | 53 | ○ | ○ | ○ | ○ | 0.6 |
| Example 37 | 143 | 2.26 | 43 | ○ | ○ | ○ | ○ | 1 |
| Comparative Example 1 | | | | × | | | | |
| Comparative Example 2 | | | | × | | | | |

As is apparent from Tables 3 and 4, the thermally conductive pastes of Examples 1 to 37 could be formed into a paste. Furthermore, since the thermally conductive pastes of Examples 1 to 37 had viscosity of 200 Pa·s or less, favorable application is possible even by using a conventionally known applying method such as a screen printing method.

In addition, the thermally conductive pastes of Examples 1 to 37 could be formed into a thermally conductive sheet in a semi-solid state, by volatizing a volatile solvent after application. This shows that a thermally conductive paste containing base oil, a thermoplastic resin having a softening point of 50°C or more and 150°C or less, and a volatile solvent, and having a solubility parameter of the volatile solvent obtained by Fedor's estimation method of 9.0 to 12.0 $cal^{(1/2)}/cm^{(3/2)}$ can be favorably applied even by a conventionally known method, and that when a volatile solvent is volatilized, a thermally conductive sheet can be formed.

Furthermore, the thermally conductive pastes of Examples 1 to 37 showed favorable "fluidity" and "sagging resistance" after they were held at 250°C for four hours, furthermore, migration lengths from the original place in the cycle evaluation test were small. This shows that in the thermally conductive paste of Examples 1 to 37, the occurrence of pump-out could be effectively suppressed.

Furthermore, in Example 31 in which 15 parts by mass of volatile solvent was contained with respect to 100 parts by mass of base oil, forming a paste was possible, and since the viscosity was 200 Pa·s or less, application could be carried out using a conventionally known application method such as screen printing method. However, it can be seen that when the viscosity is close to the upper limit, and, for example, the thermally conductive paste contains less than 10 parts by mass of a volatile solvent with respect to 100 parts by mass of the base oil, it tends to be relatively difficult to apply the paste using a conventionally known coating method such as screen printing.

Note here that similarly, in Examples 35 to 37 in which the type of "thermoplastic resin having a softening point of 50°C or more and 150°C or less" was changed, it is shown that the paste could be favorably applied, and that the occurrence of pump-out could be effectively suppressed.

On the other hand, the thermally conductive paste of Comparative Examples 1 and 2 in which the solubility parameter obtained by Fedors estimation method was outside the range of 9.0 to 12.0 $cal^{(1/2)}/cm^{(3/2)}$ could not be formed into a paste, and the thermally conductive sheet was not able to be molded in the first place.

## Claims

1. A thermally conductive paste comprising a base oil composition and an inorganic powder filler,

    the base oil composition comprising a base oil, a thermoplastic resin having a softening point of 50°C or more and 150°C or less, and a volatile solvent,
    the volatile solvent having a solubility parameter obtained by Fedors estimation method of 9.0 to 12.0 $cal^{(1/2)}/cm^{(3/2)}$.

2. The thermally conductive paste according to claim 1, comprising 10 parts by mass or more and 200 parts by mass or less of the volatile solvent with respect to 100 parts by mass of the base oil.

3. The thermally conductive paste according to claim 1 or claim 2, wherein the inorganic powder filler comprises a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler,

    wherein the inorganic powder filler has average particle diameters satisfying the following formulae (1) and (2):

$$D_2/D_1 < 0.70 \quad (1)$$

$$D_3/D_2 < 0.60 \quad (2)$$

wherein, in the formulae, $D_1$ represents an average particle diameter of the first inorganic powder filler, $D_2$ represents an average particle diameter of the second inorganic powder filler, and $D_3$ represents an average particle diameter of the third inorganic powder filler.

4. The thermally conductive paste according to claim 3, wherein

   the average particle diameter of the second inorganic powder filler is in a range of 1 $\mu$m or more and 50 $\mu$m or less, and
   the average particle diameter of the third inorganic powder filler is in a range of 0.1 $\mu$m or more and 5 $\mu$m or less.

5. The thermally conductive paste according to claim 3 or claim 4, comprising 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler, with respect to 100 parts by mass of the inorganic powder filler.

6. The thermally conductive paste according to any one of claim 1 to claim 5, wherein the inorganic powder filler comprises at least one or more types selected from copper, aluminum, zinc oxide, magnesium oxide, aluminum oxide, aluminum nitride, and silicon carbide.

7. The thermally conductive paste according to any one of claim 1 to claim 6, wherein a total of the base oil and the thermoplastic resin is 5.3 parts by mass or more and 33.3 parts by mass or less with respect to 100 parts by mass of the inorganic powder filler.

8. The thermally conductive paste according to any one of claim 1 to claim 7, comprising 50 parts by mass or more and 200 parts by mass or less of the thermoplastic resin with respect to 100 parts by mass of the base oil.

9. The thermally conductive paste according to any one of claim 1 to claim 8, wherein the base oil contains at least one or more types selected from a mineral oil, a synthetic hydrocarbon oil, a diester, a polyol ester, and a phenyl ether.

10. The thermally conductive paste according to any one of claim 1 to claim 9, wherein the thermoplastic resin includes at least one or more resins selected from an ester resin, an acrylic resin, a rosin resin, and a cellulose resin.

11. The thermally conductive paste according to any one of claim 1 to claim 10, further comprising a thixotropy adjusting agent, wherein the thixotropy adjusting agent contains at least one or more types selected from bentonite, mica, kaolin, sepiolite, saponite, and hectorite.

12. The thermally conductive paste according to claim 11, comprising 1 part by mass or more and 10 parts by mass or less of the thixotropy adjusting agent with respect to 100 parts by mass of the base oil.

13. A method for producing a thermally conductive sheet, the method comprising applying the thermally conductive paste according to any one of claim 1 to claim 12 to a surface of at least one of a heat generating component and a heat dissipating component; and drying the thermally conductive paste to obtain the thermally conductive sheet.

14. A method for producing a heat generating component provided with a heat dissipating component the heat generating component and the heat dissipating component being adhered to each other via a thermally conductive sheet, the method comprising applying the thermally conductive paste according to any one of claim 1 to claim 12 on a surface of at least one of the heat generating component and the heat dissipating component; drying the thermally conductive paste to obtain a thermally conductive sheet; and allowing the heat generating component and the heat dissipating component to adhere to each other via the thermally conductive sheet.

**INTERNATIONAL SEARCH REPORT**

| | International application No. |
|---|---|
| | PCT/JP2021/009673 |

**A. CLASSIFICATION OF SUBJECT MATTER**
Int.Cl. H01L23/36(2006.01)i, H01L23/373(2006.01)i, C08L91/00(2006.01)i, C08L101/12(2006.01)i, C09K5/14(2006.01)i, C08K3/013(2018.01)i, C08K3/34(2006.01)i
FI: C08L101/12, C08K3/013, C08K3/34, H01L23/36D, H01L23/36M, C09K5/14E, C08L91/00
According to International Patent Classification (IPC) or to both national classification and IPC

**B. FIELDS SEARCHED**

Minimum documentation searched (classification system followed by classification symbols)
Int.Cl. H01L23/36, H01L23/373, C08L1/00-101/16, C09K5/14, C08K3/013, C08K3/34

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 105315968 A (SUZHOU TIANMAI THERMAL TECHNOLOGY CO., LTD.) 10 February 2016 (2016-02-10), claims, example 1 | 1-14 |
| A | JP 2008-280516 A (COSMO OIL LUBRICANTS CO., LTD.) 20 November 2008 (2008-11-20), claims, paragraph [0032], examples | 1-14 |
| A | JP 2001-89756 A (SAINT-GOBAIN PERFORMANCE PLASTICS CORPORATION) 03 April 2001 (2001-04-03), claims, examples | 1-14 |
| A | JP 6627947 B1 (SUMITOMO METAL MINING CO., LTD.) 08 January 2020 (2020-01-08), claims, paragraphs [0077], [0078], examples | 1-14 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 April 2021 | 11 May 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/009673

| CN 05315968 A | 10 February 2016 | (Family: none) |
|---|---|---|
| JP 2008-280516 A | 20 November 2008 | US 2010/0065774 A1<br>claims, paragraph [0049], examples<br>WO 2008/126829 A1<br>CN 01657528 A |
| JP 2001-89756 A | 03 April 2001 | US 2003/0039825 A1<br>claims, examples<br>EP 067164 A1 |
| JP 627947 B1 | 08 January 2020 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001089756 A
- JP 2004075760 A
- JP 2007150349 A
- JP 4713161 B